(19) 

Europäisches
Patentamt
European
Patent Office
Office européen
des brevets

(11) **EP 3 730 287 A1**

(12) # EUROPEAN PATENT APPLICATION
published in accordance with Art. 153(4) EPC

(43) Date of publication:
**28.10.2020 Bulletin 2020/44**

(21) Application number: **18890148.2**

(22) Date of filing: **17.10.2018**

(51) Int Cl.:
**B32B 15/08** $^{(2006.01)}$

(86) International application number:
**PCT/KR2018/012297**

(87) International publication number:
**WO 2019/124703 (27.06.2019 Gazette 2019/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.12.2017 KR 20170177110**

(71) Applicant: **POSCO
Gyeongsangbuk-do 37859 (KR)**

(72) Inventors:
• **YOO, Hye Jin
Busan 46762 (KR)**
• **BYEON, Chang-Se
Gwangyang-si, Jeollanam-do 57795 (KR)**
• **KIM, Jung-Su
Gwangyang-si, Jeollanam-do 57789 (KR)**
• **LEE, Kangmin
Seoul 05567 (KR)**
• **BAEK, Jehoon
Suncheon-si, Jeollanam-do 58015 (KR)**

(74) Representative: **Zech, Stefan Markus
Meissner Bolte Patentanwälte
Rechtsanwälte Partnerschaft mbB
Postfach 86 06 24
81633 München (DE)**

(54) **COMPOSITE MATERIAL OF STEEL SHEET AND PLASTIC LAYER, HAVING FINE PLASTIC PARTICLES INTRODUCED THEREIN, AND METHOD FOR PRODUCING SAME**

(57) A composite material comprising a plastic layer; and a steel sheet laminated on one side or both sides of the plastic layer, and having a structure in which plastic particles are dispersed on the surface of the steel sheet in contact with the plastic layer and a method for producing the same are provided, wherein the composite material is capable of being used as automotive parts or structures, and the like.

[Figure 3]

Nylon 6
nano particles

## Description

## Technical Field

Cross-Reference to Related Applications

This application claims the benefit of priority based on Korean Patent Application No. 10-2017-0177110 filed on December 21, 2017, the disclosure of which is incorporated herein by reference in its entirety.

Technical Field

The present invention relates to a composite material of a steel sheet and a plastic layer using introduction of plastic fine particles and a method for producing the same.

## Background Art

Over the past 20 years, an excessive energy use problem has become a conversation topic, and there are active movements to lighten materials throughout the industry to reduce energy use. Environmental pollution problems caused by the serious use of energy and concerns about depletion of energy resources due to rapid increase in automobile demand have been intensified. Accordingly, active research has been conducted on lightening of materials, and the used amount of lightweight materials such as aluminum has been also increased every year.

In particular, in the automotive industry, the weight reduction of automobile materials is a long-standing concern and a next-generation development goal for all automobile companies. World-renowned automobile manufacturers, and companies related to parts and materials are engaged in fierce technological competition with the aim of producing automobiles with high fuel efficiency through development and adoption of new materials for lightening of automobiles.

Among lightweight materials, aluminum is widely used as an automotive material of non-ferrous materials, and especially, the ratio applied for automotive exterior panels increases. However, there is a problem that aluminum consumes a lot of energy in the processing steps and is disadvantageous in terms of price.

A high-strength steel sheet with a thin thickness has emerged as a corresponding material for aluminum. When the high-strength steel sheet is used, there is a problem that the thickness becomes thin and simultaneously the outer plate stiffness is insufficient. In addition, the high-strength steel sheet with a predetermined thickness or less has a limitation that fine wrinkles or spring back phenomena occurs during processing steps.

As an alternative, a lightweight sandwich steel sheet, in which a light polymer layer having adhesive properties is inserted between steel sheets, has been studied. However, in the composite steel sheet in the form of inserting such a plastic layer, an adhesive is applied or plasma treatment or the like is performed for bonding the plastic layer and the steel sheet. However, the method of applying the adhesive has a problem that harmful substances occur or the interface is opened according to processing or temperature changes, and the method of treating the plasma has a limitation that sufficient adhesion force between the plastic layer and the steel sheet is not secured.

[Prior Art Documents]

Japanese Laid-Open Patent Publication No. 2016-543337

## Disclosure

## Technical Problem

The present invention is intended to provide a lightweight composite material capable of providing sufficient adhesion force between a steel sheet and a plastic layer by introducing plastic fine particles on the surface of the steel sheet and a method for manufacturing the same.

## Technical Solution

In one example, the present invention provides a composite material comprising:

  a plastic layer; and

  a steel sheet laminated on one side or both sides of the plastic layer, and

  having a structure that plastic particles are dispersed on the surface of the steel sheet in contact with the plastic layer.

In another example, a method for producing a composite material is provided, which comprises steps of spraying plastic particles on a surface of a steel sheet; and

laminating the steel sheet and the plastic layer under heating and pressing conditions so that the plastic layer is in contact with the surface of the steel sheet on which the plastic particles are sprayed.

## Advantageous Effects

The composite material according to the present invention disperses fine plastic particles on a surface of a steel sheet to impart sufficient roughness to the surface of the steel sheet, thereby providing sufficient adhesion force between the steel sheet and the plastic layer and being capable of being used as automotive parts or structures, and the like.

## Description of Drawings

Figure 1 is schematic diagrams showing the relationship between surface roughness of a steel plated layer and particle diameters of plastic particles.

Figure 2 is a photograph showing plastic particles according to one example of the present invention.

Figures 3 and 4 are electron micrographs of plastic particles according to each example.

Figure 5 is a photograph of a steel sheet before spraying plastic particles, and Figure 6 is a photograph of a steel sheet spraying plastic particles.

Figure 7 is a graph showing evaluation results of bonding force between a steel sheet and a plastic according to sprayed amounts of plastic fine particles for each type of steel sheet.

## Best Mode

The composite material according to one example of the present invention comprises:

a plastic layer; and

a steel sheet laminated on one side or both sides of the plastic layer, and has

a structure that plastic particles are dispersed on the surface of the steel sheet in contact with the plastic layer.

The composite material according to the present invention uses a thin high-strength steel sheet, thereby imparting dent resistance and being capable of securing excellent price competitiveness. Through the structure that the steel sheet and the plastic layer are laminated, the outer plate stiffness according to the use of the thin steel sheet is complemented and the lightening is possible. In addition, by laminating the thin high-strength steel sheet and the plastic layer, it is possible to prevent a phenomenon of fine wrinkles or spring back, and the like caused by the processing steps. The structure of the composite material is a two-layer structure that a steel sheet and a plastic layer are laminated, or includes the case of a three-layer structure that a steel sheet, a plastic layer and a steel sheet are sequentially laminated.

In the present invention, the structure that fine plastic particles are dispersed on a surface of a steel sheet is applied to increase the bonding force between the steel sheet and the plastic layer. In one example, the plastic layer and the plastic particles are formed of a homogeneous resin. For example, the plastic layer is formed of a polyamide resin, specifically, nylon 6 resin, and the plastic particles also have a structure formed of the homogeneous resin. By making the kind of the resins forming the plastic layer and the plastic particles dispersed on the surface of the steel sheet the same, it is possible to realize excellent bonding force between the homogeneous resins in the process of bonding both layers under heating and pressing conditions. In the present invention, the homogeneous resin means a case formed of the same series resins, where if necessary, the case that the main chain forming the resin is the same, but different functional groups can be substituted or partially modified, or the case that the melting point is set differently is included.

In one example, the surface of the steel sheet in contact with the plastic layer has a structure in which a plated layer is formed, the plastic particles are in a form dispersed on the surface of the plated layer, and the surface of the plated layer has arithmetic mean roughness (Ra) in a range of 0.01 to 5 $\mu$m. The plated layer is not particularly limited, but, for example, a galvanized layer may be formed. Specifically, the surface of the plated layer may have arithmetic mean roughness (Ra) in the range of 0.01 to 4 $\mu$m, 0.1 to 0.8 $\mu$m, 1.5 to 5 $\mu$m, or 0.05 to 0.5 $\mu$m. As the fine plastic particles are dispersed on the plated layer having a certain level of roughness, the binding force between the plated layer and the fine plastic particles can be increased, and furthermore, the bonding force between the steel plate and the plastic layer can be improved. In one example, the steel sheet on which the plated layer is formed may be a galvanized steel sheet, which is, for example, a hot-dip galvanized steel sheet hot-dipped with a plating composition of 0.11Al%-0.05 Pb%-Zn.

In another aspect, the surface of the steel sheet has a structure in which irregularities are formed, wherein the distance between a peak and a peak in the irregularities can be controlled on average in a range of 0.1 to 100$\mu$m, and can be controlled, specifically, in the range of 0.1 to 5$\mu$m, 0.5 to 10$\mu$m, 1.5 to 20$\mu$m or 30 to 100$\mu$m.

In addition, the average particle diameter of the plastic particles is in a range of 0.2 to 50 $\mu$m. Specifically, the average particle diameter of the plastic particles may be in the range of 0.2 to 0.5 $\mu$m, 0.5 to 3 $\mu$m, 5 to 30 $\mu$m or 15 to 30 $\mu$m. The particle diameter of the plastic particles is taken into consideration of the roughness of the surface of the steel sheet. When the plastic particles are too large compared to the roughness of the surface of the steel sheet, the plastic particles are not properly seated between the bends of the surface of the steel sheet, thereby causing a problem that the steel sheet and the plastic particles are separated or the bonding force is lowered. Conversely, when the plastic particles are too small, there is a problem that an agglomeration phenomenon occurs due to interaction between the particles, and the particles are not evenly dispersed on the surface of the steel sheet.

In the present invention, the roughness (Ra) of the surface of the steel sheet and the average particle diameter of the plastic particles are controlled to correspond to each other. When the Ra value of the steel sheet surface is large, the average particle diameter of the plastic particles is largely controlled, and when the Ra value of the steel sheet surface is small, the average particle diameter of the plastic particles is controlled small. The surface of the steel sheet has a structure in which irregularities are formed, wherein the relationship between the distance between the peak and the peak in the irregularities and the average particle diameter of the plastic particles is also controlled.

In one example, in the composite material according to the present invention, the surface of the steel sheet laminated with the plastic layer has a structure in which a plated layer having surface irregularities is formed, and the plastic particles have a structure that they are partially or entirely embedded in the surface irregularities of the plated layer. For example, the present invention also includes a structure in which the plastic particles are completely embedded in the uneven structure of the steel sheet surface and/or a structure in which the plastic particles are partially embedded in the uneven structure of the steel sheet surface. Here, the fact that the plastic particles are embedded in the uneven structure of the steel sheet surface means that the plastic particles are located in the concave portion forming the uneven structure of the steel sheet surface, or the plastic particles are located in the valley region between peaks and peaks forming the uneven structure of the steel sheet surface.

In the present invention, the roughness of the steel sheet surface means not only the surface roughness of the steel sheet itself, but also the surface roughness formed by a plated layer or a surface treatment layer when the plated layer or the surface treatment layer is formed on the surface of the steel sheet.

In another example, the plastic particles may be in a state where polar functional groups are introduced onto the surface of the particles. The polar functional group comprises, for example, one or more of a hydroxy group (-OH), a carboxy group (-COOH), a carbonyl group (-CO-), an amino group ($-NH_2$), a hydroperoxy group (-OOH), a peroxy group (-OO-), a thiol group (-SH) and an isocyanate group (-NCO).

In addition, the plastic layer comprises a case where the surface of the plastic layer is modified. For example, the surface of the plastic layer laminated with the steel sheet may be in a state where polar functional groups are introduced thereto. The polar functional group comprises, for example, one or more of a hydroxy group (-OH), a carboxy group (-COOH), a carbonyl group (-CO-), an amino group ($-NH_2$), a hydroperoxy group (-OOH), a peroxy group (-OO-), a thiol group (-SH) and an isocyanate group (-NCO).

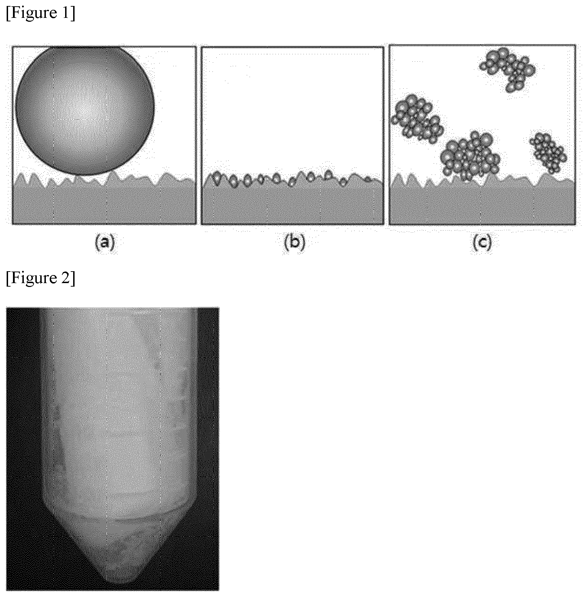

Figure 1 schematically shows the relationship between the roughness of the steel sheet surface and the particle diameter of the fine plastic particles. Figure 1(b) is a case where the roughness of the steel sheet surface and the particle diameter of the plastic particles are appropriately set. It is the case where a galvanized layer is formed on the surface of the steel sheet, wherein the plastic particles are located in the valley portions between the peaks and the peaks formed on the surface of the galvanized layer. Through this, the steel sheet and the plastic particles are stably bonded. Meanwhile, Figure 1(a) is a case where the particle diameter of the plastic particles is too large compared to the roughness of the steel sheet surface. It can be seen that the plastic particle does not settle in the rough region of the steel sheet surface. In addition, Figure 1(c) is a case where the particle diameter of the plastic particles is relatively small. It can be seen that the plastic particles agglomerate to each other to form clusters, and the plastic particles forming the clusters do not settle in the rough region of the steel sheet surface.

In another example, the plastic layer and the plastic particles are formed of the homogeneous resin, but it may have different melting points. Specifically, the case, where the plastic layer and the plastic particles satisfy the relationship of Condition 1 below, is included.

[Condition 1]

$$5°C \leq |Tm1 - Tm2| \leq 20°C$$

In Condition 1 above, Tm1 is the melting point of the plastic layer, and Tm2 is the melting point of the plastic particles.

As the melting points between the plastic layer and the plastic particles are set differently from each other, it is possible to increase the degree of freedom of process and improve bonding force when bonding the plastic layer and the steel sheet under heating and pressurizing conditions. Specifically, as heat is applied at the time of bonding the steel sheet and the plastic layer, either surface of the plastic layer and the plastic particles reaches a partially melted state first. For example, when the melting point of the plastic layer is lower than the melting point of the plastic particles, the plastic layer forms bonding with the plastic particles on the surface of the steel sheet in a state where the surface of the plastic layer is partially melted. Through this, it is possible to increase the bonding force between both. In addition, various process designs are possible depending on the melting point difference between the plastic layer and the plastic particles.

In another example, the plastic particles dispersed on the surface of the steel sheet comprise a case where melting points between particles are different from each other. Specifically, the plastic particles comprise a case where first plastic particles and second plastic particles having different melting points are mixed and dispersed so as to satisfy Condition 2 below.

[Condition 2]

$$3°C \leq |Tm2\text{-}1 - Tm2\text{-}2| \leq 10°C$$

In Condition 2 above, Tm2-1 is the melting point of the first plastic particles, and Tm2-2 is the melting point of the second plastic particles.

By dispersing two or more types of plastic particles having different melting points on the surface of the steel sheet, it is possible to increase the bonding force with the plastic layer and simultaneously control the processes according to the required physical properties. For example, the first plastic particles having a high melting point serve to provide the roughness of the steel sheet surface, and the second plastic particles having a low melting point are partially melted, thereby contributing to improvement of the bonding force with the plastic layer.

Furthermore, in the present invention, the material applied to the plastic layer is formed of an engineering plastic. The engineering plastic generically means high-strength plastics used as industrial materials and structural materials. The engineering plastic has a concept distinct from conventional plastics, which are low-molecular materials having a molecular weight of several tens to several hundreds, in that it is high-molecular materials having a molecular weight ranging from hundreds of thousands to several millions. The performance and characteristics of engineering plastics vary depending on the chemical structure, where mainly polyamide, polyacetyl, polycarbonate, polyphenylene oxide, polybutylene terephthalate, and the like are included, and polyethylene, polypropylene, polyester or polyurethane, and the like are also included. For example, the polyamide resin has excellent surface hardness, bending strength and alkali resistance, and nylon 6 or nylon 66, and the like are known.

In one example, the case where in addition to the plastic particles, one or more of conductive particles and elastic particles are mixed and dispersed on the surface of the steel sheet in contact with the plastic layer is included. By partially mixing the conductive particles among the particles dispersed on the surface of the steel sheet, weldability of the composite material can be increased, and if necessary, antistatic performance can be imparted. In addition, by mixing and dispersing the elastic particles together with the plastic particles, it is possible to alleviate the impact on vibration and improve the degree of freedom of process.

The conductive particles can be applied without limitation as long as they are particulate components that can impart conductivity. For example, as the conductive particles, one or more of a particulate carbon component such as carbon black, graphite, or graphene plates; metal particles such as gold, copper, iron or aluminum; and a conductive polymer such as polyethylene, polypyrrole or polythiophene may be used, wherein the conductive polymer may have a structure doped with various components as necessary.

The elastic particles can be applied without limitation as long as they are particulate components capable of imparting elasticity. As the elastic particles, a natural or synthetic elastic polymer may be used, and for example, SBS (poly(styrene-b-butadiene-b-styrene) resin particles and the like may be used.

In another example, the composite material according to the present invention does not require a separate adhesive layer on the lamination of the steel sheet and the plastic layer. The plastic layer and the plastic particles dispersed on the surface of the steel sheet are each other formed of the homogeneous resin. For example, heating and pressing conditions are provided for lamination between the steel sheet and the plastic layer, and through this, excellent bonding between homogeneous resins is realized. The fact that the bonding force between homogeneous resins is superior to the bonding force between heterogeneous resins under heating and/or pressurized conditions is a recognizable fact even without any separate experiment.

In addition, the present invention provides a method for producing the composite material described above.

In one example, the method for producing the composite material comprises steps of:

spraying plastic particles on a surface of a steel sheet; and

laminating the steel sheet and the plastic layer under heating and pressing conditions so that the plastic layer is in contact with the surface of the steel sheet on which the plastic particles are sprayed.

The plastic particles sprayed on the surface of the steel sheet are as described above. For example, nylon 6 may be used as the resin for forming plastic particles. The plastic particles may be prepared by dropping and stirring the solution phase in which the nylon 6 resin is mixed with a solvent of formic acid in water. In addition to the formic acid, methanol, ethanol or acetone, and the like may be used as the solvent. In some cases, it is also possible to commercially purchase plastic particles having an appropriate particle diameter.

The prepared plastic particles are sprayed on the surface of the steel sheet, for example, through an electrostatic spraying method. The composite material is produced via a process of laminating the steel sheet sprayed with plastic particles with a plastic layer under heating and/or pressing conditions. At this time, as the plastic particles and the plastic layer are formed of the homogeneous resin, excellent bonding is possible. Through this, the composite material in which the steel sheet and the plastic layer are laminated can be realized, even if a separate adhesive or surface modification is not applied.

In one example, the method for producing a composite material according to the present invention may be subjected to a step of having a certain level of surface roughness on a surface of a steel sheet before the step of spraying plastic particles on the surface of the steel sheet. For example, the step of forming arithmetic mean roughness (Ra) in a range of 0.01 to 5 μm on the surface of the steel sheet is included. Alternatively, when a certain level of surface roughness is formed on the surface of the steel sheet, such a step can be omitted. For example, when a plated layer is formed on the surface of the steel sheet, the surface of the plated layer is formed with a certain level of surface roughness, even if a separate treatment is not performed. In this case, plastic particles having a relatively small particle diameter may be sprayed on the plated layer of the steel sheet surface.

In one example, the step of spraying plastic particles on a surface of a steel sheet is performed by spraying the plastic particles on the surface of the steel sheet under electrostatic induction conditions. The sprayed plastic particles have an average particle diameter in a range of 0.2 to 50 μm. The average particle diameter of the plastic particles and the roughness of the steel sheet surface are as described above. For example, the average particle diameter of the plastic particles may be in the range of 0.2 to 0.5 μm, or 15 to 30 μm.

In another example, in the step of spraying the plastic particles on the surface of the steel sheet, the plastic particles may be in a state where polar functional groups are introduced onto the surface of the particles. The polar functional group comprises, for example, one or more of a hydroxy group (-OH), a carboxy group (-COOH), a carbonyl group (-CO-), an amino group (-NH$_2$), a hydroperoxy group (-OOH), a peroxy group (-OO-), a thiol group (-SH) and an isocyanate group (-NCO).

In another example, the step of spraying plastic particles on a surface of a steel sheet; and the step of laminating the steel sheet and the plastic layer are continuously performed. The step of spraying plastic particles on a surface of a steel sheet; and the step of laminating the steel sheet and the plastic layer are performed continuously, whereby the process time can be shortened and the production unit price can be lowered. In this case, the case where one steel sheet and a plastic layer are laminated is also possible, but the case where the first steel sheet and the second steel sheet are laminated on both sides of the plastic layer is also included.

Here, the case where the plastic layer is surface-modified is included. For example, the surface of the plastic layer laminated with the steel sheet may be in a state where polar functional groups are introduced thereto. The polar functional group comprises, for example, one or more of a hydroxy group (-OH), a carboxy group (-COOH), a carbonyl group (-CO-), an amino group (-NH$_2$), a hydroperoxy group (-OOH), a peroxy group (-OO-), a thiol group (-SH) and an isocyanate group (-NCO).

## Mode for Invention

Hereinafter, the present invention is further described in detail through examples and the like, but the scope of the present invention is not limited thereto.

## Example

Production of plastic particles

A nylon 6 solution dissolved in formic acid at a concentration of 1.5 (w/v) % was prepared, which was added dropwise to water and simultaneously stirred. At this time, the nylon 6 solution was added dropwise at a rate of 20 ml/h and stirred at 500 rpm. In addition, the final mixing ratio of formic acid and water was adjusted to 2:5 (v/v). Fine plastic particles were produced via a drying process, which was shown in Figure 2.

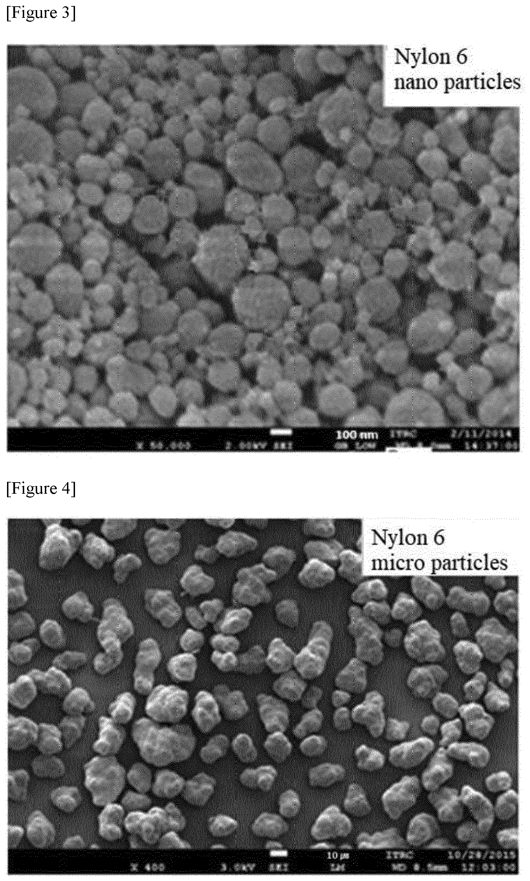

Also, the produced plastic particles were observed with an electron microscope, and the results were shown in Figure 3. Referring to Figure 3, it was confirmed that the produced plastic particles had an average particle diameter in a range of 316.1 to 433.5 nm. Furthermore, plastic particles were produced by varying dropping and stirring rates. As a result of increasing the dropping rate and reducing the stirring rate, small plastic particles in micro units were produced. The produced plastic particles were observed with an electron microscope, and referring to Figure 4, it was confirmed that the produced plastic particles had an average particle diameter in a range of 15.3 to 27.1 μm.

Spraying plastic particles on steel sheet surface

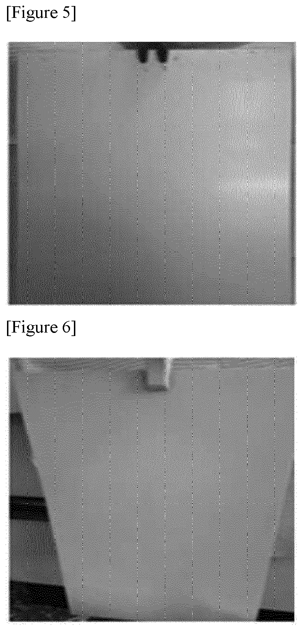

The plastic particles were sprayed on a surface of a hot-dip galvanized steel sheet using an electrostatic spraying method. Figure 5 is a photograph of the surface of the steel sheet before spraying the plastic particles, and Figure 6 is a photograph of the surface of the steel sheet after spraying the plastic particles.

In contrast to Figures 5 and 6, there is no significant difference with the naked eye, and a slight difference in terms of gloss and texture. Specifically, after spraying the plastic particles, the surface of the steel sheet is slightly reduced in gloss.

Lamination of steel sheet with plastic layer and adhesion force comparison

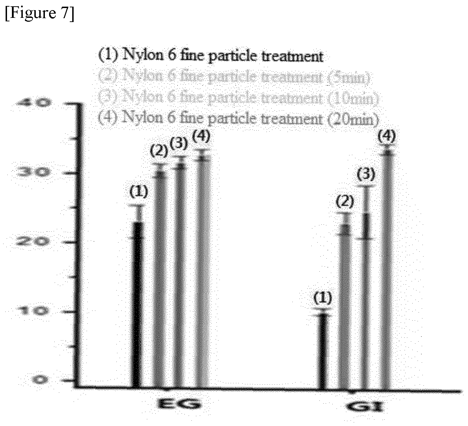

The steel sheet in which the plastic particles were dispersed and a plastic layer were laminated under heating and pressing conditions. Both the plastic particles and the plastic layer were formed of a nylon 6 resin. The relative bonding strength according to the type of steel sheet was shown in Figure 7.

Referring to Figure 7, there are some differences depending on the type of steel sheet, such as electroplated steel sheet (EG) and hot-dip galvanized steel sheet (GI), but it can be seen that the bonding force between the steel sheet and the plastic layer is significantly improved by spraying the plastic particles on the surface of the steel sheet.

**Industrial Applicability**

The composite material according to the present invention disperses fine plastic particles on a surface of a steel sheet to impart sufficient roughness to the surface of the steel sheet, thereby providing sufficient adhesion force between the steel sheet and the plastic layer and being capable of being used as automotive parts or structures, and the like.

**Claims**

1. A composite material comprising:

   a plastic layer; and
   a steel sheet laminated on one side or both sides of the plastic layer, and
   having a structure that plastic particles are dispersed on the surface of the steel sheet in contact with the plastic layer.

2. The composite material according to claim 1, **characterized in that** the plastic layer and the plastic particles are formed of a homogeneous resin.

3. The composite material according to claim 1, wherein the surface of the steel sheet in contact with the plastic layer has a structure that a plated layer is formed, the plastic particles are in a form dispersed on the surface of the plated layer, and the surface of the plated layer has arithmetic mean roughness (Ra) in a range of 0.01 to 5 $\mu$m.

4. The composite material according to claim 1, wherein the plastic particles have an average particle diameter in a range of 0.2 to 50 $\mu$m.

5. The composite material according to claim 1, **characterized in that** the surface of the steel sheet laminated with the plastic layer has a structure in which a plated layer having surface irregularities is formed, and the plastic particles have a structure in which they are partially or entirely embedded in the surface irregularities of the plated layer.

6. The composite material according to claim 1, **characterized in that** at least one of the plastic particles and the plastic layer is in a form in which polar functional groups are introduced onto the surface.

7. The composite material according to claim 1, wherein the plastic layer and the plastic particles satisfy the relationship of Condition 1 below:

[Condition 1]

$$5°C \leq |Tm1 - Tm2| \leq 20°C$$

wherein, Tm1 is the melting point of the plastic layer, and Tm2 is the melting point of the plastic particles.

8. The composite material according to claim 1, **characterized in that** first plastic particles and second plastic particles having different melting points are mixed and dispersed so that the plastic particles satisfy Condition 2 below:

[Condition 2]

$$3°C \leq |Tm2\text{-}1 - Tm2\text{-}2| \leq 10°C$$

wherein, Tm2-1 is the melting point of the first plastic particles, and Tm2-2 is the melting point of the second plastic particles.

9. The composite material according to claim 1, **characterized in that** the plastic layer is formed of an engineering plastic.

10. The composite material according to claim 1, **characterized in that** one or more of conductive particles and elastic particles are mixed and dispersed on the surface of the steel sheet in contact with the plastic layer, in addition to the plastic particles.

11. The composite material according to claim 1, **characterized in that** no separate adhesive layer interposed between the plastic layer and the steel sheet is included.

12. A method for producing a composite material comprising steps of:

   spraying plastic particles on a surface of a steel sheet; and
   laminating the steel sheet and the plastic layer under heating and pressing conditions so that the plastic layer is in contact with the surface of the steel sheet on which the plastic particles are sprayed.

13. The method for producing a composite material according to claim 12,

wherein a step of forming arithmetic mean roughness (Ra) in a range of 0.01 to 5 μm on the surface of the steel sheet is included before the step of spraying plastic particles on the surface of the steel sheet.

14. The method for producing a composite material according to claim 12,
**characterized in that** the step of spraying plastic particles on a surface of a steel sheet is performed by spraying plastic particles having an average particle diameter in a range of 0.2 to 50 μm on the surface of the steel sheet under electrostatic induction conditions.

15. The method for producing a composite material according to claim 12,
**characterized in that** the step of spraying plastic particles on a surface of a steel sheet; and the step of laminating the steel sheet and the plastic layer are performed continuously.

[Figure 1]

(a)　　　　　　(b)　　　　　　(c)

[Figure 2]

[Figure 3]

Nylon 6
nano particles

[Figure 4]

Nylon 6
micro particles

[Figure 5]

[Figure 6]

[Figure 7]

(1) Nylon 6 fine particle treatment
(2) Nylon 6 fine particle treatment (5min)
(3) Nylon 6 fine particle treatment (10min)
(4) Nylon 6 fine particle treatment (20min)

## INTERNATIONAL SEARCH REPORT

| International application No. |
| --- |
| **PCT/KR2018/012297** |

**A.  CLASSIFICATION OF SUBJECT MATTER**

*B32B 15/08(2006.01)i*

According to International Patent Classification (IPC) or to both national classification and IPC

**B.  FIELDS SEARCHED**

Minimum documentation searched (classification system followed by classification symbols)

B32B 15/08; B05D 1/04; B05D 7/14; B29C 45/14; B29C 65/48; B32B 15/085; B32B 15/09; B60J 5/04; C09J 163/00; C23C 28/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: plastic particle, resin, plated layer, dispersion, unevenness, lamination, steel plate, spraying

**C.  DOCUMENTS CONSIDERED TO BE RELEVANT**

| Category* | Citation of document, with indication, where appropriate, of the relevant passages | Relevant to claim No. |
| --- | --- | --- |
| Y | JP 4903897 B2 (TAISEI PLAS CO., LTD.) 28 March 2012<br>See claims 1, 13. | 1-15 |
| Y | JP 2003-277951 A (NISSHIN STEEL CO., LTD.) 02 October 2003<br>See paragraphs [0001], [0004]-[0006], [0010]-[0011], claim 1 and figure 1. | 1-15 |
| Y | JP 2010-173274 A (TOYODA GOSEI CO., LTD.) 12 August 2010<br>See claims 1-3. | 6 |
| A | JP 2006-297927 A (TORAY IND. INC.) 02 November 2006<br>See claims 1-5. | 1-15 |
| A | JP 07-051616 A (NIPPON STEEL CORP.) 28 February 1995<br>See paragraphs [0008]-[0011] and claim 1. | 1-15 |
| A | KR 10-2017-0027955 A (POSCO et al.) 13 March 2017<br>See paragraphs [0019]-[0022] and claims 1, 2, 8. | 1-15 |

| ☐  Further documents are listed in the continuation of Box C. | ☒  See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 21 JANUARY 2019 (21.01.2019) | **21 JANUARY 2019 (21.01.2019)** |
| Name and mailing address of the ISA/KR<br>Korean Intellectual Property Office<br>Government Complex Daejeon Building 4, 189, Cheongsa-ro, Seo-gu, Daejeon, 35208, Republic of Korea<br>Facsimile No. +82-42-481-8578 | Authorized officer<br><br>Telephone No. |

Form PCT/ISA/210 (second sheet) (January 2015)

**INTERNATIONAL SEARCH REPORT**
Information on patent family members

International application No.

**PCT/KR2018/012297**

| Patent document cited in search report | Publication date | Patent family member | Publication date |
|---|---|---|---|
| JP 4903897 B2 | 28/03/2012 | JP WO2009-116484 A1 | 21/07/2011 |
| | | US 2011-0008644 A1 | 13/01/2011 |
| | | US 2014-0305903 A1 | 16/10/2014 |
| | | US 9567675 B2 | 14/02/2017 |
| | | WO 2009-116484 A1 | 24/09/2009 |
| JP 2003-277951 A | 02/10/2003 | JP 3882998 B2 | 21/02/2007 |
| JP 2010-173274 A | 12/08/2010 | CN 101792533 A | 04/08/2010 |
| | | CN 101792533 B | 21/08/2013 |
| | | JP 5560565 B2 | 30/07/2014 |
| | | US 2010-0197882 A1 | 05/08/2010 |
| | | US 8431225 B2 | 30/04/2013 |
| JP 2006-297927 A | 02/11/2006 | NONE | |
| JP 07-051616 A | 28/02/1995 | NONE | |
| KR 10-2017-0027955 A | 13/03/2017 | CN 108136733 A | 08/06/2018 |
| | | EP 3345756 A1 | 11/07/2018 |
| | | EP 3345756 A4 | 11/07/2018 |
| | | JP 2018-528104 A | 27/09/2018 |
| | | KR 10-1755112 B1 | 06/07/2017 |
| | | US 2018-0281349 A1 | 04/10/2018 |
| | | WO 2017-039391 A1 | 09/03/2017 |

Form PCT/ISA/210 (patent family annex) (January 2015)

14

**EP 3 730 287 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020170177110
- JP 2016543337 A